**Europäisches Patentamt**

**European Patent Office**

**Office européen des brevets**

(19)

(11) Veröffentlichungsnummer: **0 195 262**
**B1**

(12) **EUROPÄISCHE PATENTSCHRIFT**

(45) Veröffentlichungstag der Patentschrift:
26.07.89

(51) Int. Cl.⁴: **B 60 T 17/08**

(21) Anmeldenummer: **86102098.0**

(22) Anmeldetag: **18.02.86**

(54) **Membranzylinder.**

(30) Priorität: **22.03.85 DE 8508521 U**

(43) Veröffentlichungstag der Anmeldung:
**24.09.86 Patentblatt 86/39**

(45) Bekanntmachung des Hinweises auf die Patenterteilung:
**26.07.89 Patentblatt 89/30**

(84) Benannte Vertragsstaaten:
**DE FR IT NL**

(56) Entgegenhaltungen:
**EP-A- 0 025 558**
**DE-A- 2 942 387**
**US-A- 3 636 822**

(73) Patentinhaber: **ROBERT BOSCH GMBH, Postfach 50,
D-7000 Stuttgart 1 (DE)**

(72) Erfinder: **Siebold, Manfred, Amsterdamer Strasse 6,
D-7030 Böblingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem Membranzylinder nach der Gattung des Hauptanspruchs. Ein derartiger Membranzylinder ist bekannt (DE-C-29 36 899).

Bei diesem bekannten Membranzylinder steht der Membran ein Kopf eines, eine hohle Druckstange abschließenden Stopfens gegenüber. Der Kopf ist aber nicht glatt und eben, seine Anlagefläche für die Membran ist vielmehr mit einem zentralen Loch versehen, in dem ein Stößel axial beweglich ist. Dadurch kann eine Beschädigung der Membran eintreten, wenn sie mit der Anlagefläche beim Betrieb der Einrichtung zusammenarbeitet.

### Vorteile der Erfindung

Demgegenüber ist bei einem Membranzylinder mit den kennzeichnenden Merkmalen des Hauptanspruchs der Vorteil gegeben, daß die Anlagefläche für die Membran vollständig glatt und eben, vollkreisflächig und nicht unterbrochen ist, so daß die Membran nicht beschädigt werden kann. Dazu kommt der Vorteil, daß zur Montage oder Demontage des Stopfens ein ganz einfaches Werkzeug verwendet werden kann, das von hinten außen am Kopf des Stopfens ansetzbar ist und das das geforderte Anziehdrehmoment sicher übertragen kann.

### Zeichnung

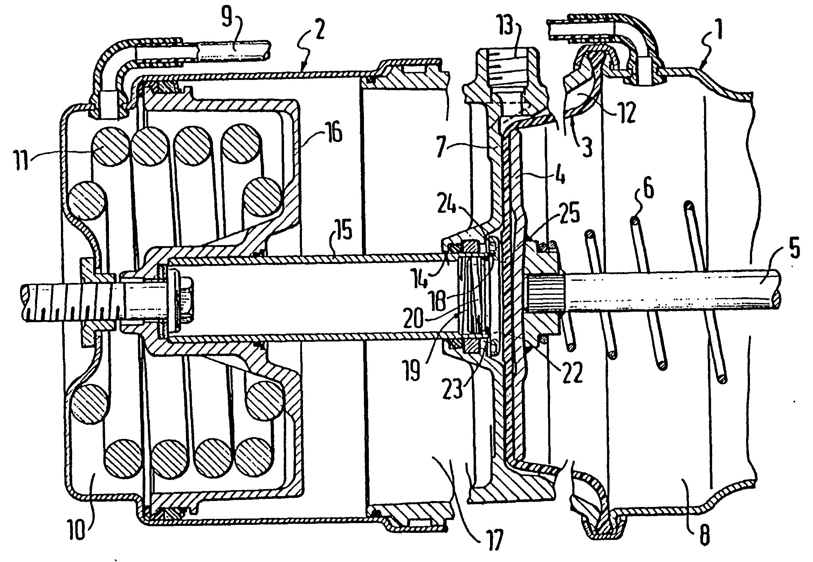

Ein Ausführungsbeispiel der Erfindung ist in der Zeichnung dargestellt und in der nachfolgenden Beschreibung näher erläutert.

### Beschreibung des Ausführungsbeispieles

Ein Membranzylinder 1 ist als Einkammer-Bremszylinder ausgebildet und – wie bei Druckluft-Kraftfahrzeugbremsanlagen für Nutzfahrzeuge üblich – mit einem Federspeicher-Bremszylinder 2 zu einer Bremszylinderkombination zusammengebaut. Im Membranzylinder 1 ist eine als Arbeitsglied des Mambranzylinders 1 dienende Membran 3 eingespannt, die über einen Membranteller 4 auf eine Druckstange 5 einwirken kann, die auf nicht gezeigte Weise die Bremsen betätigt. Die Druckstange 5 wird von einer Rückholfeder 6 umgeben, die dafür sorgt, daß die Membran 3 in ihrer Ausgangsstellung an einer radialen Gehäuse-Trennwand 7 anliegt. Druckstange 5 und Rückholfeder 6 liegen in einer Außenluftkammer 8, die über ein Außenfohr 9 mit einer Federkammer 10 für eine Speicherfeder 11 des Federspeicher-Bremszylinders 2 verbunden ist.

Im Membranzylinder 1 ist auf der anderen Seite der Membran 3 eine Arbeitskammer 12 angeordnet, in die über einen Anschlußstutzen 13 Druckluft einführbar oder aus der Druckluft ausbringbar ist.

Die Trennwand 7 hat ein zentrales Loch 14, das von einer hohlen Druckstange 15 abgedichtet durchdrungen wird. Die Druckstange 15 trägt einen Kolben 16 des Federspeicher-Bremszylinders 2, der zwischen sich und der Trennwand 7 eine Arbeitskammer 17 einschließt. Diese Arbeitskammer 17 hat einen nicht gezeigten Anschlußstutzen, der an eine Federspeicher-Druckleitung angeschlossen ist.

Der dem Federspeicher-Bremszylinder 2 zugekehrten Fläche der Membran 3 steht eine Stirnfläche 18 der hohlen Druckstange 15 gegenüber. Die Stirnfläche 18 und der Innenraum der Druckstange 15 werden abgedeckt durch einen Stopfen 19, der mit einem Schaft 20 in die hohle Druckstange 15 eingeschraubt und dort abgedichtet ist.

Der Stopfen 19 hat einen Kopf 22, dessen Außendurchmesser größer ist als der Außendurchmesser der hohlen Druckstange 15. Dadurch ist am Stopfen-Kopf 22 ein Ringbereich 23 gebildet, mit dem er die Druckstangen-Stirnfläche 18 überragt. An seiner der Membran abgekehrten Seite ist der Ringbereich 23 des Stopfen-Kopfes 22 mit zwei axial gerichteten Ausformungen 24 in Form von achsparallelen Sacklöchern versehen. Anstelle von Sacklöchern können aber auch Erhebungen vorgesehen sein. Diese An- oder Ausformungen 24 dienen zum Ansetzen eines Werkzeugs zur Montage oder Demontage des Stopfens 15. Die der Membran 3 zugekehrten Fläche 25 des Stopfens dagegen ist völlig glatt und kantenfrei, kreisflächig und außen abgerundet und bildet eine schmiegsame Anlagefläche für die Membran.

Bei der Arbeit des kombinierten Einkammer-Federspeicherbremszylinders wird der Mittenbereich der Membran 3 nicht beansprucht, wenn mit dem Einkammer-Bremszylinder 1 gebremst wird. Der Druck in der Kammer 12 drückt die Membran 3 nach rechts, und die Stange 5 betätigt die Bremsen.

Wenn aber mit dem Federspeicher-Bremszylinder 2 durch Druckabsenkung in der Kammer 17 gebremst wird, drückt der Stopfen-Kopf 22 mit seiner Fläche 25 mit großer Kraft gegen die Membran 3. Dabei drückt er sich unter Materialverdrängung in den Membrankörper hinein. Die Membran 3 wird aber auch bei großem Druck nicht beschädigt, weil die Fläche 25 des Kopfes 22 völlig eben und glatt und außen gerundet ist.

### Patentansprüche

1. Membranzylinder für die Betätigung durch ein Druckmittel, insbesondere für eine Druckmittel-Bremsanlage von Kraftfahrzeugen, bei dem mit der Membran eine zur Membran-Achse gleichachsig angeordnete, hohle Druckstange zur Kraftübertragung zusammenarbeitet, die mit einer ringförmigen Stirnfläche einem Mittenbereich der Membran gegenübersteht, wobei die Druckstangen-Stirnfläche abgedeckt ist durch den flachen Kopf eines Stopfens, der mit einem Gewinde-Schaft in das der Membran zugekehrte Ende der Druckstange eingeschraubt ist, der ferner die Druckstangen-Stirnfläche überragt und an einer der Membran zugekehrten Umfangsfläche abgerundet ist, dadurch gekennzeichnet, daß der Stopfenkopf (22) auf seiner gesamten der Membran (3) zugekehrten Fläche völlig glatt und kantentfrei ausgebildet ist und daß zum Verschrauben des Stopfens in der Druckstange notwendige axialgerichtete Schlüsselflächen (Ausformungen 24) zum Angriff eines Montage-Werkzeugs für den Stopfen (19) an dem Ringbereich (23) des Stopfen-Kopfes (22) an seiner der Membran (3) abgekehrten Seite angeordnet sind.

2. Membranzylinder nach Anspruch 1, dadurch gekennzeichnet, daß die Schlüsselflächen (Ausformungen 24) gebildet sind durch Sacklöcher, die achsparallel zur Membran-Achse im Ringbereich (23) des Stopfens (19) vorgesehen sind.

**Claims**

1. Diaphragm cylinder for actuation by a pressurized medum, particularly for a pressurized medium brake installation in motor vehicles, in which the diaphragm cooperates to transmit forces with a hollow pressure rod arranged coaxially with the diaphragm axis, which rod lies opposite a central region or the diaphragm with an annular end face, the pressure rod end face being masked by the flat head of a plug, which is screwed by a screwthreaded shank into the end of the pressure rod facing the diaphragm, which also projects beyond the pressure rod end face and is rounded on a circumferential surface which faces the dia-, phragm, characterized in that the plug head (22) is constructed entirely smooth and without edges on its entire surface which faces the diaphragm (3) and in that axially oriented key faces (deformations (24) which are necessary for screwing the plug in the pressure rod for the engagement of an assembly tool for the plug (19) are arranged on the annular region (23) of the plug head (22) on its side remote from the diaphragm (3).

2. Diaphragm cylinder according to Claim 1, characterized in that the key faces (deformations 24) are formed by blind holes which are provided axially parallel to the diaphragm axis in the annular region (23) of the plug (19).

**Revendications**

1. Cylindre à membrane pour la commande par un agent sous pression, en particulier pour une installastion de freinage de véhicules à moteur par agent sous pression, dans lequel coopère avec la membrane pour la transmission de force une barre de compression creuse placée coaxialement avec la membrane, barre qui se trouve par une surface frontale en forme d'anneau en face de la zone centrale de la membrane, où la surface frontale de la barre de compression est recouverte par la tête plate d'un tampon, qui est vissé par une tige filetée à l'extrémité de la barre de compression tournée vers la membrane, qui en outre dépasse la surface frontale de la barre de compression et présente un arrondi sur son pourtour tourné vers la membrane, caractérisé ce que la tête du tampon (22), sur toute la surface tournée vers la membrane (3), est exécutée complètement lisse et sans arête et que pour la fixation par vis du tampon sur la barre de compression, des appuis de clés (parties creuses 24) pour mise en œuvre d'un outil de montage destiné au tampon (19), sont disposés sur la zone annulaire (23) de la tête (22) du tampon sur son côté opposé à la membrane (3).

2. Cylindre à membrane selon la revendication 1, caractérisé en ce que les appuis de clés (parties creuses 24) sont constitués de trous borgnes qui sont prévus avec des axes parallèles à l'axe de la membrane dans la zone annulaire (23) du tampon.